# FASCICULE DE BREVET EUROPEEN

(11) **EP 2 670 653 B1**
(45) Date de publication et mention de la délivrance du brevet: **26.11.2014**
(21) Numéro de dépôt: 12707833.5
(22) Date de dépôt: 31.01.2012
(51) Int. Cl.: B62K 5/02, B62K 15/00

(54) **TRICYCLE TRANSFORMABLE**
KONVERTIERBARES DREIRAD
CONVERTIBLE TRICYCLE

(30) Priorité: 01.02.2011 FR 1100293
(43) Date de publication de la demande: 11.12.2013
(73) Titulaire: Aveline, Erick, 78600 Maisons Laffitte (FR)
(72) Inventeur: Aveline, Erick, 78600 Maisons Laffitte (FR)
(74) Mandataire: Robert, Mathias
(86) Numéro de dépôt international: PCT/FR2012/050211
(87) Numéro de publication internationale: WO 2012/104548

(56) Documents cités:
- DE-U1- 20 208 156
- GB-A- 2 453 796

## Description

La présente invention se rapporte à un tricycle transformable dans le but d'en réduire l'encombrement ou d'en permettre l'emploi dans une utilisation annexe pour le transport de charges peu encombrantes mais d'un poids trop important pour être porté à bras sur un long trajet.

On connaît le principe des bicyclettes pliantes pouvant être portées à main, rangées dans un coffre ou fixées sur une galerie d'automobile. Après pliage, les deux roues se trouvent quasiment superposées dans le même axe. Le but recherché pour ces bicyclettes pliantes est bien atteint si l'on s'en tient au seul problème d'encombrement, mais leur stabilité en reste quelque peu précaire. D'autre, part de telles bicyclettes pliées ne peuvent pas assurer le maintien d'une charge sur le porte-bagages.

Le document DE-U-20208156 divulgue un tricycle transformable comprenant un premier élément avec châssis, selle et roues arrières et un deuxième élément avec une roue motrice et un système de direction.

On connaît également un tricycle pliable dont la roue avant est équipée d'un moteur électrique concentrique au moyeu. Ce tricycle, utilisable principalement comme une patinette, peut être complété d'un siège permettant le déplacement d'une personne assise, par exemple une personne handicapée. Ce tricycle, une fois plié ne permet pas le transport de charges.

On a donc pensé à créer un tricycle transformable afin de réduire son encombrement en configuration pliée en envisageant, pour cette configuration, un polygone de sustentation inscrit entre deux roues du tricycle transformable associé à un dispositif d'appui solidaire du support. Le centre de gravité du tricycle transformable plié vide ou chargé doit donc se situer largement à l'intérieur dudit polygone de sustentation. Ainsi, le tricycle transformable est stable en configuration pliée. Il peut être chargé sur son porte-bagages en position dépliée, c'est-à-dire en configuration route, et le rester sans difficulté pour l'opération de transformation en position pliée. L'opération inverse est également possible.

Ce véhicule tricycle transformable est avantageusement, mais non exclusivement, utilisable en zone urbaine sur des trajets alternant la circulation du tricycle transformable sur la chaussée en configuration route et dans des lieux accessibles uniquement aux piétons (lieux publics, trottoirs, transports en commun, commerces par exemple) en configuration pliée.

A cet effet, selon les termes de la revendicaton 1, l'invention concerne un tricycle transformable, comprenant un premier élément comportant un châssis équipé en sa partie supérieure d'une selle et en sa partie inférieure de deux roues tournant librement autour d'un axe de rotation horizontal, destinées à assurer la stabilité transversale du tricycle transformable, un deuxième élément comportant en sa partie supérieure un guidon supporté par une potence de guidon fixée à une fourche par l'intermédiaire de moyens d'articulation, ladite fourche pivotant dans un tube et étant équipée d'une roue motrice actionnée par des moyens d'entraînement en rotation, un troisième élément comportant une entretoise de liaison comprenant deux parties articulées par un dispositif pivotant autour d'un axe d'articulation et comportant un dispositif de verrouillage et déverrouillage, la partie haute du tube étant reliée à l'avant du châssis par un dispositif articulé sur un axe d'articulation, la partie basse du tube étant reliée à l'arrière du châssis par l'intermédiaire de l'entretoise, articulée à son extrémité avant sur le tube et articulée à son extrémité arrière sur le châssis, à proximité des roues du premier élément, lesdits axes d'articulation permettant le pliage du tricycle transformable, d'une forme dépliée dans laquelle le tricyclique peut être utilisé pour rouler sur une route, à une forme repliée du tricyclique, dite forme chariot.

Les trois éléments forment un ensemble triangulé, donc indéformable.

L'ensemble plié se réduit à un chariot, apte à rouler sur les deux roues du premier élément, aisément manipulable en le tirant ou le poussant comme un chariot de magasin à levier communément appelé « diable ».

Avantageusement, les axes d'articulation sont parallèles à l'axe de rotation des roues du premier élément.

Selon une caractéristique de l'invention, la potence de guidon est munie d'un dispositif articulé sur un axe d'articulation et d'un dispositif de verrouillage et déverrouillage, apte à être verrouillé pour l'utilisation du tricycle dans sa forme dépliée.

De plus, la fourche peut comporter, en sa partie supérieure, un tube de haut de fourche dans lequel est engagé et serré un tube, la potence de guidon étant articulé sur ledit tube par l'intermédiaire des moyens d'articulation correspondants.

En outre, le guidon peut être pliable et peut comporter deux demi-guidons reliés sur un support de guidon par un dispositif articulé pivotant autour d'au moins un axe d'articulation et d'un dispositif de verrouillage et déverrouillage apte à être verrouillé pour rigidifier ledit guidon pliable.

Dans ce cas, les deux demi-guidon peuvent comporter des moyens d'engrènement coopérant entre eux.

Le châssis peut également comporter des moyens d'appui au sol qui, combinés avec les roues du premier élément, permettent de garantir la stabilité du tricycle transformable dans sa forme repliée.

Selon une autre caractéristique de l'invention, dans la forme repliée du tricycle, la roue motrice s'étend perpendiculairement aux roues du premier élément.

Selon une forme de réalisation de l'invention, le châssis comporte un ensemble de préhension articulé comportant une base solidaire d'une partie haute du châssis ou du deuxième élément, un bras monté pivotant sur la base entre une position relevée et une position rabattue, une poignée fixée sur le bras mobile et des moyens de verrouillage et déverrouillage du bras en position relevée ou rabattue.

De préférence, le tube du second élément est formé d'un demi-tube amovible s'emboîtant dans un tube muni d'un logement en partie basse, d'un loquet et de son réceptacle d'accroche servant à la fixation amovible du demi-tube sur le tube afin de pouvoir désolidariser le second élément du châssis et de l'entretoise.

Dans cette forme de réalisation, les premier et troisième éléments peuvent être éventuellement utilisés seuls comme un chariot tiré ou poussé sur les deux roues du premier élément, après avoir été désolidarisé du second élément.

De plus, le châssis peut être solidaire d'un porte-bagages qui, en forme repliée du tricycle, est destinée à être à proximité du sol et, combiné avec les roues du premier élément, garantit la stabilité au sol du tricycle transformable.

Les moyens d'entraînement en rotation de la roue motrice peuvent comportent un pédalier, une chaîne de transmission engrenant d'une part avec un plateau dudit pédalier et d'autre part avec un pignon solidaire de ladite roue motrice.

En variante, les moyens d'entraînement en rotation de la roue motrice peuvent comporter un moteur électrique, soit en complément des moyens de transmission à pédalier précités, auquel cas il s'agit d'un moteur électrique d'assistance, soit en remplacement des moyens de transmission à pédalier précités, auquel cas le tricycle est mû intégralement à l'aide du moteur électrique.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en élévation du tricycle transformable en configuration route, c'est-à-dire dans sa forme dépliée,
- la figure 2 est une vue en élévation, dans le même plan que la figure 1, du tricycle transformable en configuration chariot, c'est-à-dire dans sa forme repliée, et stabilisé au sol,
- la figure 3 est une vue de l'avant du tricycle transformable dans sa forme repliée,
- la figure 4 est une vue partielle éclatée, et en perspective, du tricycle transformable, montrant une forme de réalisation du guidon pliable,
- la figure 5 est une vue en perspective arrière montrant une phase de pliage du tricycle transformable,
- le figure 6 est une vue partielle et en perspective d'une variante, représentant le montage amovible du châssis et de l'entretoise sur le second élément,
- la figure 7 est une vue correspondant à la figure 1, illustrant une autre forme de réalisation dans laquelle le porte-bagages est rabaissé et solidaire du châssis,
- la figure 8 est une vue correspondant à la figure 2, du tricycle de la figure 7,

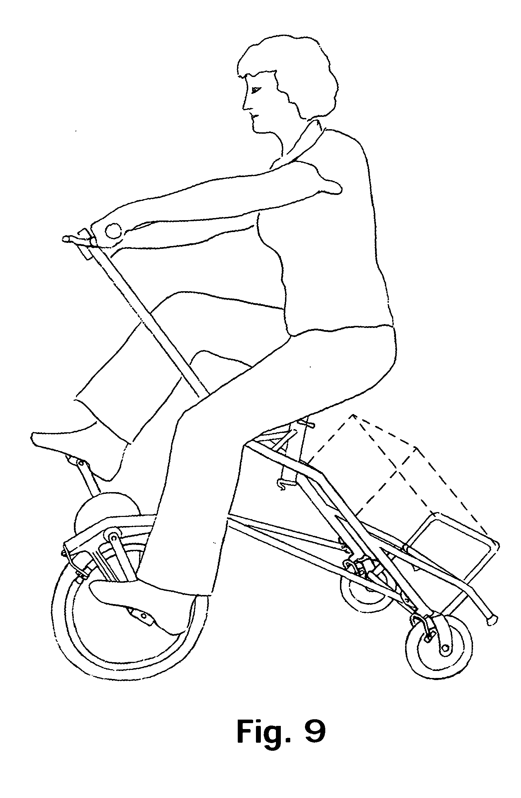

- la figure 9 est une vue schématique et en perspective, représentant la position de conduite du tricycle transformable,
- les figures 10, 11, 12 et 13 sont des vues correspondant respectivement aux figures 1, 2, 3 et 4, illustrant une autre forme de réalisation de l'invention,
- la figure 14 est une vue en coupe du guidon pliable illustré à la figure 13, selon le plan P de la figure 13.

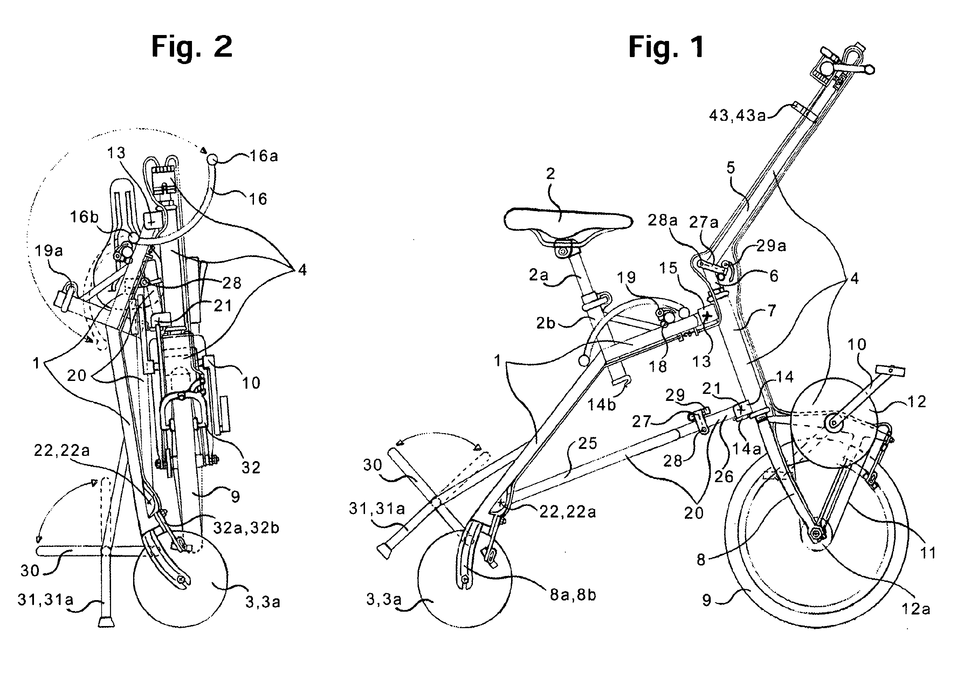

Les figures 1 à 5 illustrent une première forme de réalisation d'un tricycle transformable selon l'invention. Celui-ci comprend trois éléments assemblés les uns aux autres.

En particulier, le premier élément comporte un châssis 1 équipé en sa partie supérieure et selon son axe longitudinal d'une selle 2, d'un tube support de selle 2b, fendu dans sa partie haute et muni d'un dispositif de verrouillage et déverrouillage 19a. Le tube 2b est destiné à recevoir une tige de selle 2a lorsque le tricycle est dans sa position dépliée, appelée également configuration route. La tige de selle 2a est fixée sous la selle 2 et le tube 2b est soudé sur ledit châssis 1, par exemple à trois niveaux, de façon à garantir son maintien.

Sur un côté de la partie haute du châssis 1 est soudé un tube horizontal 18 destiné à recevoir la tige de selle 2a en configuration chariot du tricycle, c'est-à-dire en position repliée du tricycle.

Le tube 18 est fendu à une extrémité dite intérieure et est équipé d'un dispositif de verrouillage et déverrouillage 19.

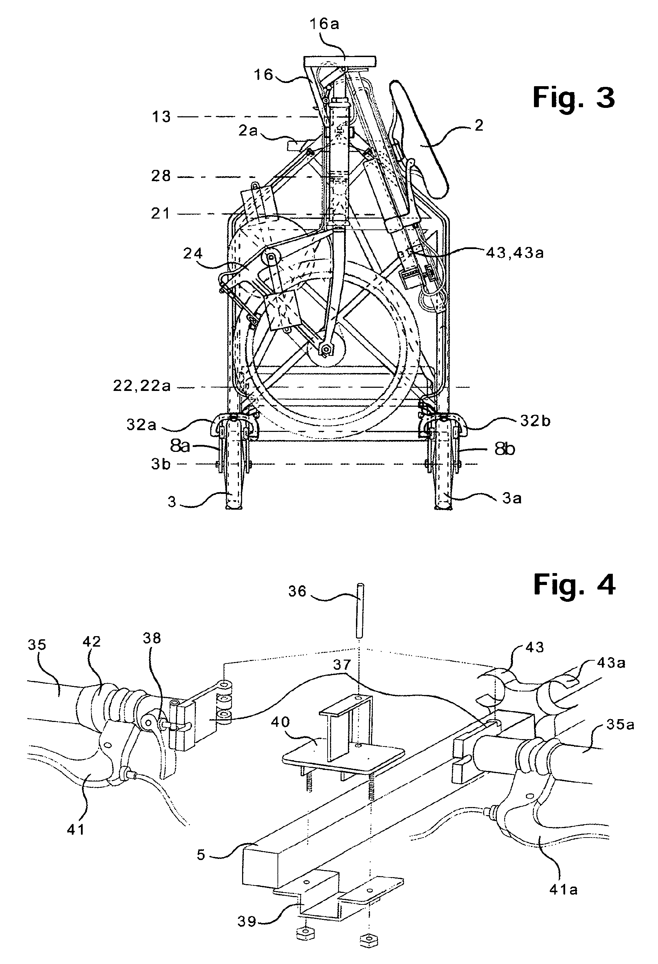

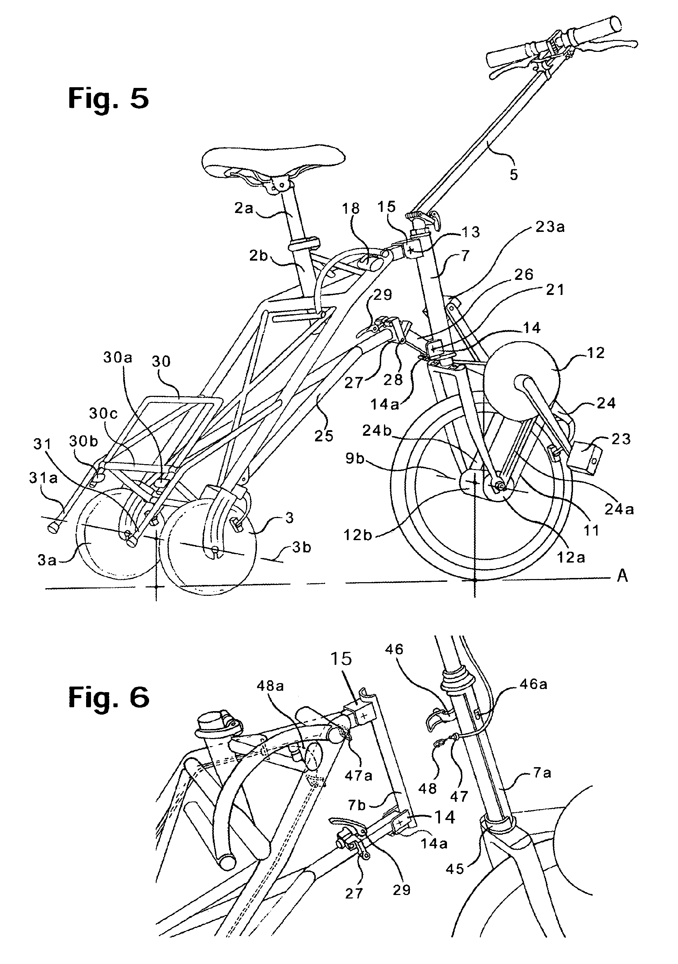

Le tricyclique comporte en outre un ensemble de préhension articulé, comportant une base 16b solidaire d'une partie haute du châssis 1, un bras 16 monté pivotant sur la base 16b entre une position relevée (en lignes pleines aux figures 2 et 3) et une position rabattue (en lignes pleines aux figures 1 et 5 et en lignes pointillées à la figure 2), une poignée 16a fixée sur le bras mobile 16 et des moyens de verrouillage et déverrouillage du bras en position relevée ou rabattue.

Lorsque le bras mobile 16 est en position relevée et que le tricyclique est en configuration chariot, la poignée 16a permet à un utilisateur de tirer ou pousser manuellement le tricyclique ou chariot.

Sur la partie inférieure du châssis 1, sont fixées de part et d'autre du châssis 1, deux fourches 8a, 8b recevant chacune une roue 3, 3a, dite petite roue. Les roues 3, 3a tournent librement autour d'un axe de rotation 3b horizontal et perpendiculaire à l'axe longitudinal A (représenté à la figure 5), disposées de part et d'autre de la selle 2 et assurant ainsi la stabilité transversale du tricycle transformable en toutes circonstances, c'est-à-dire aussi bien en position pliée qu'en position dépliée.

Sur l'avant des deux fourches 8a, 8b recevant les petites roues 3, 3a, des étriers de freins arrière 32a, 32b sont fixés sur le châssis 1 et agissent sur lesdites petites roues 3, 3a. Ces étriers sont actionnés par une poignée de frein 41, par l'intermédiaire de câbles de frein coulissant dans des gaines. La poignée de frein 41 agit sur les étriers de freins arrière 32a, 32b avec un système de répartition égal de la puissance de freinage.

Des pieds 31, 31 a d'appui au sol sont soudés de part et d'autre du châssis 1 et permettent, en étant combiné avec les petites roues 3, 3a, de garantir la stabilité du tricycle transformable en configuration chariot (figures 2 et 3), avec ou sans charge.

Un porte-bagages repliable 30, destiné à porter des charges, est situé à l'arrière de la selle 2 et est monté pivotant sur le châssis 1, autour d'un axe d'articulation 30c. Des butées 30a, 30b (figure 5) permettent un blocage dudit porte-bagages repliable 30 en position abaissée. Un loquet à fermeture par poussée permet un blocage du porte-bagages repliable 30 en position relevée.

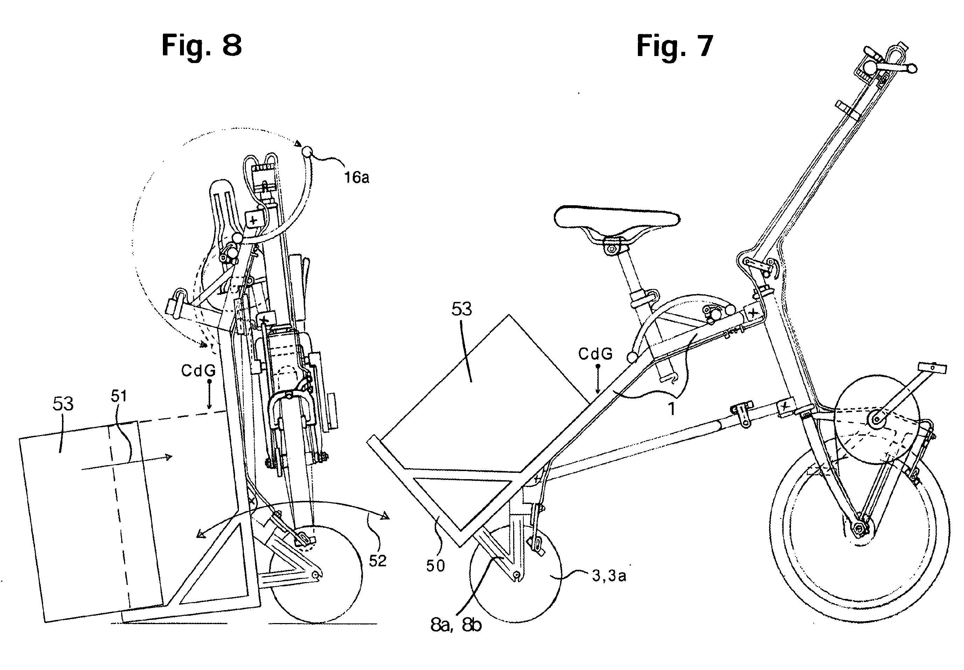

Les figures 7 et 8 illustrent une variante de réalisation dans laquelle le porte-bagages 50 est solidaire du châssis. Dans cette variante, le porte-bagages 50 n'est pas rabattable. On notera toutefois que, lorsque le tricyclique est en configuration chariot (figure 8), le porte-bagages 50 est au ras du sol, ce qui permet de pouvoir facilement y déposer une charge 53. En outre, en configuration chariot, le porte-bagages 50 et les petites roues 3, 3a, garantissent la stabilité au sol du tricycle ou chariot, avec ou sans charge 53.

Le châssis 1 permet, en configuration chariot, un chargement par l'arrière plus aisé en faisant glisser (selon la flèche 51) la charge 53. On peut ensuite basculer (selon la flèche 52) l'ensemble avec la charge 53, à l'aide de la poignée 16a et transporter l'ensemble sans effort.

Un second élément du tricycle transformable est formé par un dispositif de direction et motricité 4 comprenant, en sa partie supérieure, une commande de direction composée d'un guidon pliable, d'une potence de guidon 5 constituée d'un tube, par exemple de section carrée, fixé à un tube 6 par l'intermédiaire d'un dispositif articulé 27a sur un axe d'articulation 28a et d'un dispositif de verrouillage et déverrouillage 29a apte à être verrouillé lorsque le tricycle est déplié (configuration route). Le tube 6 est inséré et serré dans un tube de haut de fourche par une vis de serrage et un organe de serrage, comme cela est connu en soi.

Le guidon pliable, mieux visible à la figure 4, est composé de deux demi-guidons 35, 35a reliés chacun sur un support de guidon commun 40 par une platine 37 montée pivotante sur le support 40, autour d'un axe d'articulation 36. Le guidon comporte en outre un dispositif de verrouillage et déverrouillage 38 apte à être verrouillé pour rigidifier ledit guidon pliable lorsque le tricyclique est en position dépliée. Le dispositif 38 peut également être déverrouillé pour pouvoir rabattre les deux demi-guidons 35,35a le long de la potence de guidon 5 et éventuellement les encliqueter sur des attaches 43, 43a montées sur la potence de guidon 5.

Le support de guidon 40 est fixé sur la potence de guidon 5, par l'intermédiaire d'une platine de serrage 39 et de deux écrous. Sur le demi-guidon 35 est fixée une commande indexée des vitesses 42 ainsi que la poignée de frein 41. Sur le demi-guidon 35a est fixée une poignée de frein 41 a agissant sur un étrier de frein avant 32 par l'intermédiaire d'un câble coulissant dans une gaine.

Le dispositif de direction et motricité 4 comprend en sa partie inférieure le tube de haut de fourche, monté pivotant dans un tube 7, et soudé sur sa partie inférieure à une fourche 8 proprement dite, équipée d'une roue motrice 9. La roue 9 est destinée à être freinée par l'étrier de frein avant 32.

Un pédalier 10 permet d'entraîner la roue motrice 9 en rotation, par l'intermédiaire d'une chaîne de transmission 11 engrenant, d'une part, sur un plateau 12 du pédalier 10 et, d'autre part, sur un pignon 12a solidaire de la roue motrice 9. La roue 9 peut être équipée d'un moyeu à vitesses intégrées 12b, relié à la commande indexée des vitesses 42 par un câble coulissant dans une gaine.

Le pédalier 10 est muni de pédales pliables 23, 23a et est fixé sur un support de pédalier 24 (figures 3 et 5) maintenant ledit pédalier 10 fixe au dessus de la roue motrice 9. Le support de pédalier 24 est fixé, à l'arrière, sur le haut de ladite fourche 8 et est soutenu, à l'avant, par deux jambes de force 24a, 24b fixées en partie basse de chaque côté de ladite roue motrice 9, au niveau d'un axe de rotation 9b de ladite roue motrice 9. L'étrier de frein avant 32 est fixé sur le support de pédalier 24.

Un troisième élément du tricyclique comporte une entretoise 20 de liaison maintenant l'écartement inférieur entre le châssis 1 et le dispositif de direction et motricité 4. Cette entretoise 20 est constituée de deux parties 25, 26 articulées par un dispositif 27 pivotant autour d'un axe d'articulation 28 et comportant un dispositif de verrouillage et déverrouillage 29. La partie 26 est située à l'avant et la partie 25 est située à l'arrière. La partie 25 présente une forme en Y, dont une branche est reliée au dispositif d'articulation 27, et dont les deux autres branches opposées s'étendent en direction de chacune des roues 3, 3a.

On assemble les trois éléments du tricycle en les reliant par des dispositifs articulés sur des axes d'articulation.

Plus particulièrement, le tube 7 du dispositif de direction et motricité 4 est relié, dans sa partie haute, au châssis 1, par un dispositif articulé 15 sur un axe d'articulation 13. Le tube 7 est également relié, dans sa partie basse, à l'arrière dudit châssis 1, par l'intermédiaire de l'entretoise 20.

En particulier, le tube 7 est relié à l'avant de l'entretoise 20 par un dispositif articulé 14 sur un axe d'articulation 21. Le châssis 1 est en outre relié à la partie arrière de l'entretoise 20, par un dispositif constitué d'axes d'articulation 22, 22a, situé à proximité des petites roues 3,3a.

L'entretoise 20 se plie en deux parties par le dispositif articulé 27 sur l'axe d'articulation 28. Les axes d'articulation 13, 21, 22, 22a, 28 permettent le pliage du tricycle transformable de la forme dépliée ou configuration route, à la forme repliée ou configuration chariot. Les axes d'articulation 13, 21, 22, 22a, 28 sont parallèles à l'axe de rotation 3b des petites roues 3,3a. Un loquet à fermeture par poussée 14a, fixé sous le dispositif articulé 14, s'accroche en configuration chariot sur un réceptacle d'attache 14b se trouvant en bas du tube 2b et permettant le blocage du dispositif de direction et motricité 4 sur le châssis 1.

En configuration chariot, la roue motrice 9 est perpendiculaire aux petites roues 3, 3a.

L'opération de pliage du tricyclique, de sa position dépliée vers sa position repliée, comporte six étapes :
- La première étape consiste à rabattre les pédales pliables 23, 23a sur le pédalier 10,
- La deuxième étape consiste à rabattre le dispositif de direction et motricité 4 sur le châssis 1. Pour cela, il convient de déverrouiller le dispositif de verrouillage et déverrouillage 29, d'ouvrir le dispositif articulé 27 tout en rabattant sur ledit châssis 1 le dispositif de direction et motricité 4 en le faisant pivoter d'un quart de tour, puis en l'appliquant sur ledit châssis 1 jusqu'à l'encliquetage du loquet à fermeture par poussée 14a sur son réceptacle d'attache 14b, la roue motrice 9 se trouvant perpendiculaire aux petites roues 3,3a.
- La troisième étape consiste à plier le guidon pliable. Pour cela, il convient de déverrouiller le dispositif de verrouillage et déverrouillage 38, d'ouvrir le dispositif articulé 37, de rabattre les deux demi-guidons 35,35a et les encliqueter sur leurs attaches 43, 43a.
- La quatrième étape consiste à plier la potence de guidon 5. Pour cela, il convient de déverrouiller le dispositif de verrouillage et déverrouillage 29a, d'ouvrir le dispositif articulé 27a, et de rabattre ladite potence du guidon 5 sur l'arrière de ladite roue motrice 9.
- La cinquième étape consiste à déplacer la selle 2. Pour cela, il convient de déverrouiller le dispositif de verrouillage et déverrouillage 19a, d'enlever l'ensemble formé par la selle 2 et la tige de selle 2a hors du tube 2b, d'enfiler la tige de selle 2a dans le tube 18 et de verrouiller le dispositif de verrouillage et déverrouillage 19.
- La sixième étape consiste à relever et à verrouiller l'ensemble de préhension 16, 16a, 16b.

L'opération de dépliage se déroule de façon inverse. Pour un minimum d'encombrement (afin de ranger l'ensemble dans un coffre par exemple), il convient de laisser l'ensemble de préhension 16, 16a et 16b en position rabattue et de relever le porte-bagages repliable 30.

Dans la forme de réalisation représentée à la figure 6, le tube 7 est formé d'un demi-tube 7b monté sur un tube 7a et s'engageant à son extrémité inférieure dans un logement 45 en forme d'arc de cercle, ménagée en partie basse du tube 7a.

Le demi-tube 7b est en outre maintenu, dans sa partie supérieure, par un loquet 46 coopérant avec un réceptacle d'accroche 46a.

Le demi-tube 7b peut ainsi être plaqué sur le tube 7a et fixé, d'une part par emboîtement de son extrémité inférieure dans le logement 45, et par engagement du loquet 46 dans son réceptacle d'accroche 46a.

Le châssis 1 est fixé en partie haute du demi-tube 7b, par l'intermédiaire du dispositif d'articulation 15. L'entretoise 20 est fixée en partie basse du demi-tube 7b, par l'intermédiaire du dispositif d'articulation 14.

Un tel dispositif de fixation du demi-tube 7b sur le tube 7a, permet de pouvoir fixer ou retirer facilement le demi-tube 7b par rapport au tube 7a. On peut ainsi, si nécessaire, désolidariser rapidement le dispositif de direction et motricité 4 du châssis 1 et de l'entretoise 20, notamment lorsque le tricyclique est en configuration chariot.

Tout autre moyen de fixation amovible entre le dispositif de direction et motricité 4, d'une part, et le châssis 1 et l'entretoise 20, d'autre part, pourrait être utilisé.

Dans cette forme de réalisation, le câble de frein servant à l'actionnement des étriers de freins 32a, 32b équipant les roues 3, 3a, et la gaine correspondante sont séparés en deux parties, respectivement un câble et une gaine avants et un câble et deux gaines arrières. La partie avant du câble de frein et la gaine avant sont destinées à demeurer sur le dispositif de direction et motricité 4, après séparation du demi-tube 7b et du tube 7a. De même, la partie arrière du câble de frein et les gaines arrières sont destinées à demeurer sur le châssis 1 et/ou sur l'entretoise 20, après séparation du demi-tube 7b et du tube 7a.

Les parties avant et arrière précitées sont reliées de façon amovible, par exemple à l'aide d'un mousqueton 48. L'extrémité arrière de la gaine avant précitée peut comporter une butée 47 destinée à être accrochée de façon amovible sur une plaque d'emboîtage 47a fixée au châssis.

Plus particulièrement, la partie arrière du câble de frein 48a peut relier les deux étriers 32a, 32b de sorte qu'une traction en un point de la partie arrière 48a, par exemple une traction dans une zone médiane de ladite partie arrière 48a, provoque l'actionnement des étriers 32a, 32b équipant les roues 3, 3a.

En position dépliée du tricycle, c'est-à-dire en configuration route, les câbles de frein avant et arrière sont fixés l'un à l'autre par le mousqueton 48, et la butée 47 de la gaine avant peut être accrochée ou engagée dans la plaque d'emboîtage 47a.

Afin de séparer le dispositif de direction et motricité 4 du reste du tricycle, il convient :
- de sortir la butée 47 de la plaque d'emboitage 47a,
- d'ouvrir le mousqueton 48 et le décrocher du câble de frein arrière 48a,
- d'ouvrir le loquet 46 et le dégager du réceptacle d'accroche 46a,
- de basculer vers l'avant le dispositif de direction et motricité 4 pour écarter le haut du tube 7a du haut du demi-tube 7b,
- de soulever le châssis 1 et l'entretoise 20, afin de sortir le bas du demi-tube 7b du logement 45 située en partie basse du tube 7a,

Il est ensuite possible de déverrouiller le dispositif de verrouillage et déverrouillage 29, d'ouvrir le dispositif articulé 27 tout en rabattant sur ledit châssis 1 le demi-tube 7b jusqu'à l'encliquetage du loquet à fermeture par poussée 14a sur son réceptacle d'attache 14b.

L'opération se déroule de façon inverse pour rattacher le châssis 1 et l'entretoise 20 au dispositif de direction et motricité 4.

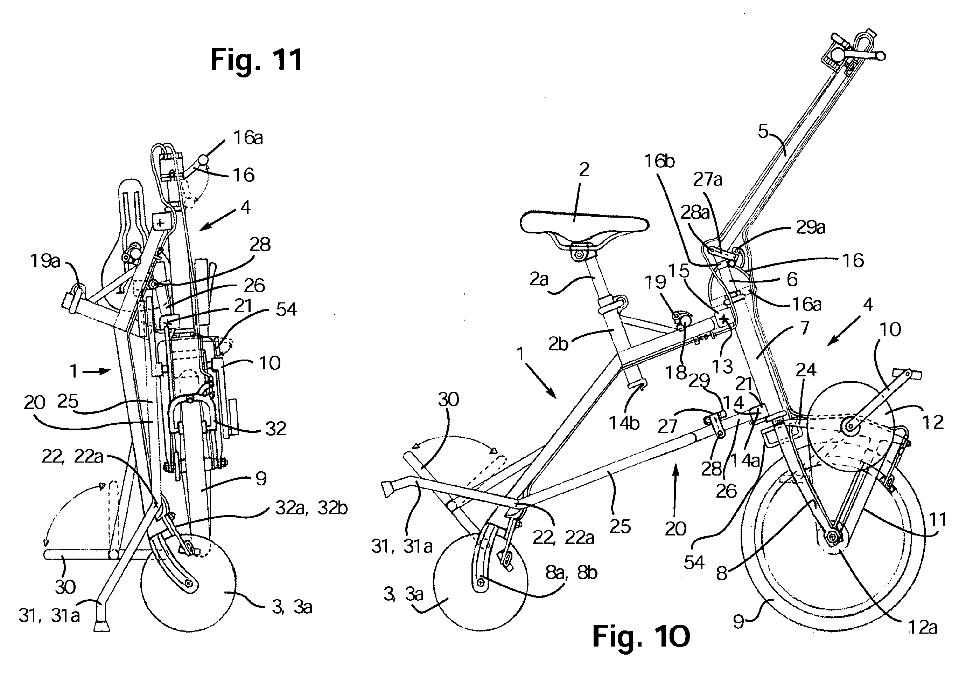

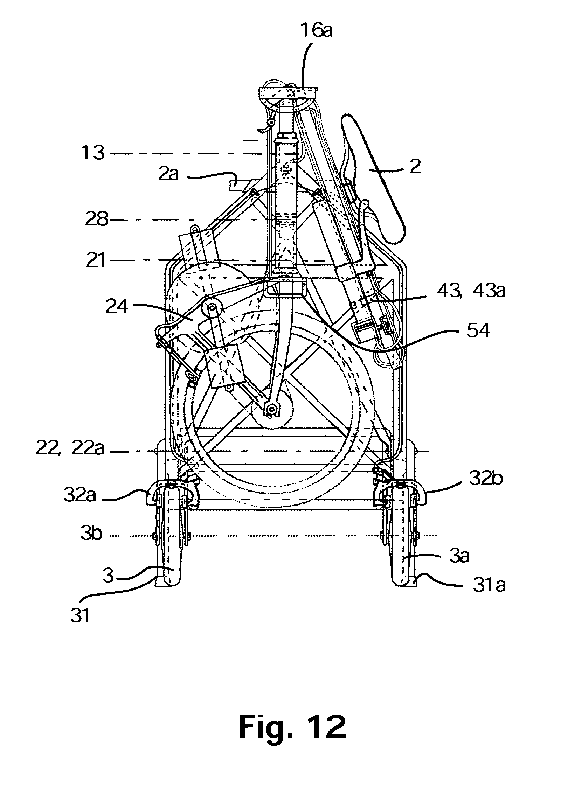

Les figures 10 à 14 représentent une autre forme de réalisation, dont les différences avec la forme de réalisation des figures 1 à 5 seront explicitées ci-après.

Dans cette forme de réalisation, le bras 16 de l'ensemble de préhension est articulé sur le dispositif de direction et motricité 4, plus précisément sur le tube 6 et sous le dispositif d'articulation 27a, et peut présenter la forme d'un étrier pivotant, sur lequel est fixée la poignée 16a.

Une autre poignée 54 est montée de façon pivotante sur le support de pédalier 24, à proximité de l'extrémité inférieure du tube 7, cette poignée 54 servant à faciliter le pliage ou le dépliage du tricyclique. Une telle poignée 54 peut également être prévue dans les autres formes de réalisation.

Dans cette forme de réalisation également, les pieds d'appui au sol 31, 31 a sont formés directement avec l'entretoise 20 et s'étendent dans le prolongement des deux branches arrières de l'entretoise 20.

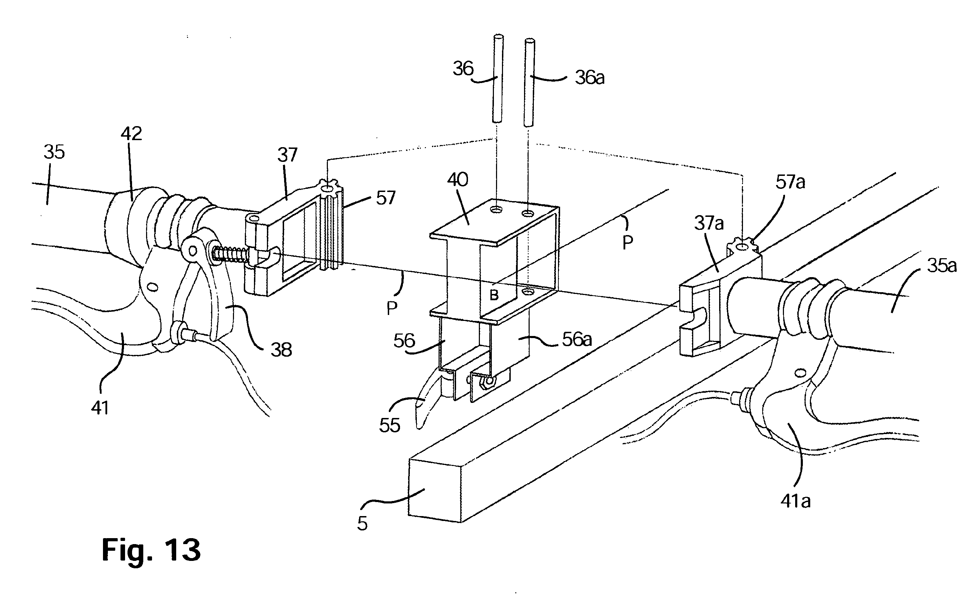

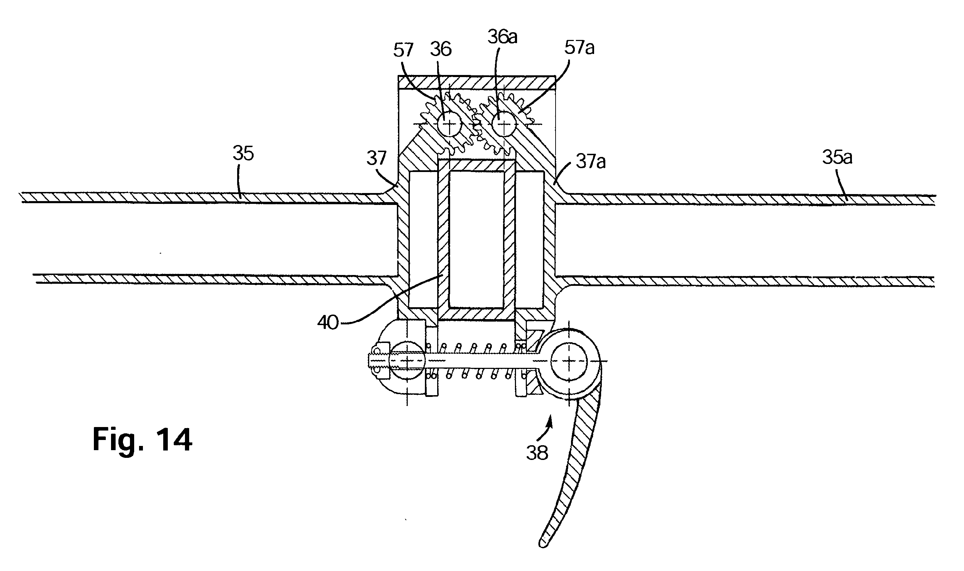

Comme cela est visible aux figures 13 et 14, le guidon pliable peut comporter deux demi-guidons 35, 35a, comprenant chacun une platine 37, 37a. Les platines 37, 37a sont articulées sur le support de guidon 40, autour d'axes 36, 36a. Ce support 40 est fixé à la potence de guidon 5, à l'aide de moyens de verrouillage et déverrouillage 55. Plus particulièrement, le support de guidon 40 comporte deux parties de serrage 56, 56a délimitant entre elles un espace destiné à l'insertion de la potence de guidon 5, cette dernière pouvant être serrée entre les parties de serrage 56, 56a, à l'aide des moyens de verrouillage et déverrouillage 55.

Chaque platine 37, 37a comporte des moyens d'engrènement 57, 57a coopérant avec les moyens d'engrènement 57a, 57 de la platine opposée. De cette manière, le pivotement de l'un des demi-guidons 35, 35a autour de son axe d'articulation 36, 36a entraîne également le pivotement de l'autre demi-guidon 35a, 35, par l'intermédiaire des moyens d'engrènement 57, 57a.

Un tel guidon pliable peut également être utilisé dans les autres formes de réalisation décrites ci-dessus. En variante, un tel guidon peut être utilisé sur tout type de bicyclette ou de tricycle, qu'il soit pliable ou non.

D'autres variantes peuvent également être envisagées.

C'est ainsi que le pédalier peut entraîner la roue par l'intermédiaire de moyens d'engrenage, tel qu'un train d'engrenages, ayant un support de démultiplication adapté. En outre, à la chaîne de transmission peut être substituée une courroie, par exemple crantée, engrenant sur le plateau de pédalier et le pignon de la roue motrice appropriés à une telle technologie. La motricité du tricycle transformable peut également être obtenue par l'addition du pédalier, décrit précédemment, et d'un moteur à assistance électrique.

Enfin, le système d'entraînement à pédalier de la roue motrice 9 peut être remplacé par un moteur électrique actionnant à lui seul la rotation de la roue motrice 9. Un tel moteur électrique est alimenté par une batterie, qui peut être montée sur le châssis 1.

Les freins à étrier peuvent également être remplacés par des freins à disque.

En outre, les matériaux utilisés pour construire le tricycle transformable peuvent être l'acier, les alliages d'aluminium ou tous autres métaux, tels que les matériaux plastiques, les matériaux composites contenant des fibres de carbone ou de toutes autres natures, tous mis en oeuvre selon les techniques connues. Les bandages de roues pourront être pleins ou creux, gonflés ou non.

Enfin tout l'équipement connu dans le domaine du « cycle » peut être adapté pour répondre, en particulier, aux normes et règlements en vigueur dans les domaines concernés par l'utilisation de l'objet de l'invention.

Pour répondre à une utilisation sur la voie publique, le tricycle transformable peut être équipé d'au moins un garde boue, de systèmes d'éclairage avant et arrière, de réflecteurs ou catadioptres, de signalisations latérales, d'une sonnette et tout autre matériel adéquat en conformité avec la sécurité routière du pays concerné.

## Revendications

1. Tricycle transformable comprenant un premier élément comportant un châssis (1) équipé en sa partie supérieure d'une selle (2) et en sa partie inférieure de deux roues (3, 3a) tournant librement autour d'un axe de rotation (3b) horizontal, destinées à assurer la stabilité transversale du tricycle transformable, un deuxième élément comportant en sa partie supérieure un guidon (35, 35a), dans lequel tricycle le guidon est supporté par une potence de guidon (5) fixée à une fourche par l'intermédiaire de moyens d'articulation (27a), ladite fourche pivotant dans un tube (7) et étant équipée d'une roue motrice (9) actionnée par des moyens d'entraînement en rotation (10, 11, 12, 12a), le tricycle comprenant en outre un troisième élément comportant une entretoise (20) de liaison comprenant deux parties (25, 26) articulées par un dispositif (27) pivotant autour d'un axe d'articulation (28) et comportant un dispositif de verrouillage et déverrouillage (29), la partie haute du tube (7) étant reliée à l'avant du châssis (1) par un dispositif articulé (15) sur un axe d'articulation (13), la partie basse du tube (7) étant reliée à l'arrière du châssis (1) par l'intermédiaire de l'entretoise (20), articulée (14, 21) à son extrémité avant sur le tube (7) et articulée (22, 22a) à son extrémité arrière sur le châssis (1), à proximité des roues (3, 3a) du premier élément, lesdits axes d'articulation (13, 21, 22, 22a, 28) permettant le pliage du tricycle transformable, d'une forme dépliée dans laquelle le tricyclique peut être utilisé pour rouler sur une route, à une forme repliée du tricyclique, dite forme chariot.

2. Tricycle transformable selon la revendication 1, dans lequel les axes d'articulation (13, 21, 22, 22a, 28) sont parallèles à l'axe de rotation (3b) des roues (3, 3a) du premier élément.

3. Tricycle transformable selon la revendication 1 ou 2, dans lequel la potence de guidon (5) est munie d'un dispositif articulé (27a) sur un axe d'articulation (28a) et d'un dispositif de verrouillage et déverrouillage (29a), apte à être verrouillé pour l'utilisation du tricycle dans sa forme dépliée.

4. Tricycle transformable selon l'une des revendications 1 à 3, dans lequel la fourche comporte, en sa partie supérieure, un tube de haut de fourche dans lequel est engagé et serré un tube (6), la potence de guidon (5) étant articulé sur ledit tube (6) par l'intermédiaire des moyens d'articulation (27a) correspondants.

5. Tricycle transformable selon l'une des revendications 1 à 4, dans lequel le guidon est pliable et comporte deux demi-guidons (35, 35a) reliés sur un support de guidon (40) par un dispositif articulé (37) pivotant autour d'au moins un axe d'articulation (36) et d'un dispositif de verrouillage et déverrouillage (38) apte à être verrouillé pour rigidifier ledit guidon pliable.

6. Tricycle transformable selon la revendication 5, dans lequel les demi-guidons (35, 35a) comportent des moyens d'engrènement (57, 57a) coopérant entre eux.

7. Tricycle transformable selon l'une des revendications 1 à 6, dans lequel le châssis (1) comporte des moyens d'appui au sol (31, 31 a) qui, combinés avec les roues (3, 3a) du premier élément, permettent de garantir la stabilité du tricycle transformable dans sa forme repliée.

8. Tricycle transformable selon l'une des revendications 1 à 7, dans lequel, dans la forme repliée du tricycle, la roue motrice (9) s'étend perpendiculairement aux roues (3, 3a) du premier élément.

9. Tricycle transformable selon l'une des revendications 1 à 8, dans lequel le châssis (1) comporte un ensemble de préhension articulé comportant une base (16b) solidaire d'une partie haute du châssis (1) ou du deuxième élément, un bras (16) monté pivotant sur la base (16b) entre une position relevée et une position rabattue, une poignée (16a) fixée sur le bras mobile (16) et des moyens de verrouillage et déverrouillage du bras en position relevée ou rabattue.

10. Tricycle transformable selon l'une des revendications 1 à 9, dans lequel le tube (7) du second élément est formé d'un demi-tube amovible (7b) s'emboîtant dans un tube (7a) muni d'un logement (45) en partie basse, d'un loquet (46) et de son réceptacle d'accroche (46a), servant à la fixation amovible du demi-tube (7b) sur le tube (7a) afin de pouvoir désolidariser le second élément du châssis (1) et de l'entretoise (20).

11. Tricycle transformable selon l'une quelconque des revendications 1 à 10, dans lequel le châssis (1) est solidaire d'un porte-bagages (50) qui, en forme repliée du tricycle, est destinée à être à proximité du sol et, combiné avec les roues (3, 3a) du premier élément, garantit la stabilité au sol du tricycle transformable.

12. Tricycle transformable selon l'une des revendications 1 à 11, dans lequel les moyens d'entraînement en rotation de la roue motrice (9) comportent un pédalier (10), une chaîne de transmission (11) engrenant d'une part avec un plateau (12) dudit pédalier (10) et d'autre part avec un pignon (12a) solidaire de ladite roue motrice (9).

13. Tricycle transformable selon l'une des revendications 1 à 12, dans lequel les moyens d'entraînement en rotation de la roue motrice (9) comportent un moteur électrique.

## Patentansprüche

1. Konvertierbares Dreirad, enthaltend ein erstes Teil mit einem Rahmen (1), das in seinem oberen Abschnitt mit einem Sattel (2) und in seinem unteren Abschnitt mit zwei Rädern (3, 3a) versehen ist, die sich um eine horizontal verlaufende Drehachse (3b) frei drehen und dazu bestimmt sind, die Querstabilität des konvertierbaren Dreirads zu gewährleisten, sowie ein zweites Teil, das in seinem oberen Abschnitt einen Lenker (35, 35a) aufweist, bei welchem Dreirad der Lenker von einem Lenkervorbau (5) getragen wird, der über Anlenkmittel (27a) an eine Gabel befestigt ist, wobei die Gabel in einem Rohr (7) verschwenkbar und mit einem Antriebsrad (9) versehen ist, das über Drehantriebsmittel (10, 11, 12, 12a) betätigt wird, wobei das Dreirad ferner ein drittes Teil aufweist, das eine Verbindungsstrebe (20) mit zwei Abschnitten (25, 26) enthält, die über eine Vorrichtung (27) angelenkt sind, die um eine Anlenkachse (28) verschwenkbar ist und eine Ver- und Entriegelungsvorrichtung (29) aufweist, wobei der obere Abschnitt des Rohrs (7) mit dem vorderen Bereich des Rahmens (1) über eine Anlenkvorrichtung (15) verbunden ist, die an eine Anlenkachse (13) angelenkt ist, wobei der untere Abschnitt des Rohrs (7) mit dem hinteren Bereich des Rahmens (1) über die Verstrebung (20) verbunden ist, die an ihrem vorderen Ende an das Rohr (7) angelenkt ist (14, 21) und an ihrem hinteren Ende an den Rahmen (1) angelenkt ist (22, 22a), und zwar nahe bei den Rädern (3, 3a) des ersten Teils, wobei die Anlenkachsen (13, 21, 22, 22a, 28) das Umklappen des konvertierbaren Dreirads von einem ausgeklappten Zustand, in welchem das Dreirad zum Fahren auf einer Straße benutzt werden kann, hin zu einem zusammengeklappten Zustand des Dreirads, Wagenzustand genannt, ermöglichen.

2. Konvertierbares Dreirad nach Anspruch 1, wobei die Anlenkachsen (13, 21, 22, 22a, 28) parallel zur Drehachse (3b) der Räder (3, 3a) des ersten Teils verlaufen.

3. Konvertierbares Dreirad nach Anspruch 1 oder 2, wobei der Lenkervorbau (5) mit einer Anlenkvorrichtung (27a) ausgestattet ist, die an eine Anlenkachse (28a) angelenkt ist, sowie mit einer Ver- und Entriegelungsvorrichtung (29a), die dazu geeignet ist, zur Benutzung des Dreirads in seinem ausgeklappten Zustand verriegelt zu werden.

4. Konvertierbares Dreirad nach einem der Ansprüche 1 bis 3, wobei die Gabel in ihrem oberen Abschnitt ein Gabeloberrohr aufweist, in welches ein Rohr (6) eingreift und verspannt ist, wobei der Lenkervorbau (5) über entsprechende Anlenkmittel (27a) an das Rohr (6) angelenkt ist.

5. Konvertierbares Dreirad nach einem der Ansprüche 1 bis 4, wobei der Lenker umklappbar ist und zwei Halblenker (35, 35a) aufweist, die mit einem Lenkerträger (40) über eine Anlenkvorrichtung (37) verbunden sind, die um zumindest eine Anlenkachse (36) und um eine Ver- und Entriegelungsvorrichtung (38) verschwenkbar ist, die dazu geeignet ist, verriegelt zu werden, um den umklappbaren Lenker zu verstreifen.

6. Konvertierbares Dreirad nach Anspruch 5, wobei die Halblenker (35, 35a) Eingriffsmittel (57, 57a) aufweisen, die miteinander zusammenwirken.

7. Konvertierbares Dreirad nach einem der Ansprüche 1 bis 6, wobei der Rahmen (1) Abstützmittel (31, 31a) zum Abstützen am Boden aufweist, die in Kombination mit den Rädern (3, 3a) des ersten Teils gestatten, die Stabilität des konvertierbaren Dreirads in seinem zusammengeklappten Zustand zu gewährleisten.

8. Konvertierbares Dreirad nach einem der Ansprüche 1 bis 7, wobei im zusammengeklappten Zustand des Dreirads das Antriebsrad (9) sich senkrecht zu den Rädern (3, 3a) des ersten Teils erstreckt.

9. Konvertierbares Dreirad nach einem der Ansprüche 1 bis 8, wobei der Rahmen (1) ein angelenkte Greifeinrichtung aufweist, die ein fest mit einem oberen Abschnitt des Rahmens (1) bzw. des zweiten Teils verbundenes Basisstück (16b), einen Arm (16), der zwischen einer angehobenen Position und einer umgelegten Position verschwenkbar am Basisstück (16b) gelagert ist, einen an den beweglichen Arm (16) befestigten Griff (16a) und Ver- und Entriegelungsmittel zum Ver- und Entriegeln des Arms in der angehobenen bzw. umgelegten Position aufweist.

10. Konvertierbares Dreirad nach einem der Ansprüche 1 bis 9, wobei das Rohr (7) des zweiten Teils aus einem lösbaren Halbrohr (7b) gebildet ist, das in ein Rohr (7a) einsteckbar ist, das mit einer Aufnahmeausnehmung (45) im unteren Abschnitt, einem Knebel (46) und seiner Verhakungsaufnahme (46a) versehen ist, die zur lösbaren Befestigung des Halbrohrs (7b) an das Rohr (7a) dienen, um das zweite Teil vom Rahmen (1) und von der Verstrebung (20) lösen zu können.

11. Konvertierbares Dreirad nach einem der Ansprüche 1 bis 10, wobei der Rahmen (1) fest mit einem Gepäckträger (50) verbunden ist, der im zusammengeklappten Zustand des Dreirads dazu bestimmt ist, sich nahe am Boden zu befinden und der in Kombination mit den Rädern (3, 3a) des ersten Teils die Standfestigkeit des konvertierbaren Dreirads auf dem Boden gewährleistet.

12. Konvertierbares Dreirad nach einem der Ansprüche 1 bis 11, wobei die Mittel zum Drehantrieb des Antriebsrads (9) ein Tretlager (10) aufweisen, wobei eine Übertragungskette (11) einerseits mit einem Kettenrad (12) des Tretlagers (10) und andererseits mit einem Ritzel (12a) kämmt, das fest mit dem Antriebsrad (9) verbunden ist.

13. Konvertierbares Dreirad nach einem der Ansprüche 1 bis 12, wobei die Mittel zum Drehantrieb des Antriebsrads (9) einen Elektromotor aufweisen.

## Claims

1. A transformable tricycle comprising a first element including a frame (1) fitted in its top portion with a saddle (2) and in its bottom portion with two wheels (3, 3a) freely rotatable about a horizontal axis of rotation (3b) for providing the transformable tricycle with transverse stability, and a second element including in its top portion a handlebar (35, 35a), in which tricycle the handlebar is supported by a handlebar bracket (5) fastened to a fork by hinge means (27a), said fork pivoting in a tube (7) and being fitted with a drive wheel (9) actuated by rotary drive means (10, 11, 12, 12a), the tricycle further comprising a third element including a connection spacer (20) having two portions (25, 26) hinged by a device (27) pivoting about a hinge axis (28) and including a locking and unlocking device (29), the top portion of the tube (7) being connected to the front of the frame (1) by a device (15) hinged about a hinge axis (13), the bottom portion of the tube (7) being connected to the rear of the frame (1) by means of the spacer (20), which is hinged (14, 21) at its front end to the tube (7), and which is hinged (22, 22a) at its rear end to the frame (1) in the proximity of the wheels (3, 3a) of the first element, said hinge axes (13, 21, 22, 22a, 28) enabling the transformable tricycle to be folded from an unfolded shape in which the tricycle can be used for running on a road to a folded shape of the tricycle, referred to as a cart shape.

2. A transformable tricycle according to claim 1, wherein the hinge axes (13, 21, 22, 22a, 28) are parallel to the axis of rotation (3b) of the wheels (3, 3a) of the first element.

3. A transformable tricycle according to claim 1 or claim 2, wherein the handlebar bracket (5) is provided with a device (27a) hinged about a hinge axis (28a) and with a locking and unlocking device (29a) suitable for being locked to enable the tricycle to be used in its unfolded shape.

4. A transformable tricycle according to any one of claims 1 to 3, wherein the fork includes, in its top portion, a top-of-fork tube having engaged and clamped therein a tube (6), the handlebar bracket (5) being hinged to said tube (6) via corresponding hinge means (27a).

5. A transformable tricycle according to any one of claims 1 to 4, wherein the handlebar is foldable and comprises two half-handlebars (35, 35a) connected to a handlebar support (40) by a hinged device (37) pivoting about at least one hinge axis (36) and a locking and unlocking device (38) suitable for being locked to make said foldable handlebar rigid.

6. A transformable tricycle according to claim 5, wherein the half-handlebars (35, 35a) include mutually cooperating meshing means (57, 57a).

7. A transformable tricycle according to any one of claims 1 to 6, wherein the frame (1) includes means (31, 31a) for bearing against the ground, which means serve, in combination with the wheels (3, 3a) of the first element, to guarantee that the transformable tricycle is stable when in its folded shape.

8. A transformable tricycle according to any one of claims 1 to 7, wherein, in the folded shape of the tricycle, the drive wheel (9) extends perpendicularly to the wheels (3, 3a) of the first element.

9. A transformable tricycle according to any one of claims 1 to 8, wherein the frame (1) includes a hinged handle assembly comprising a base (16b) secured to a top portion of the frame (1) or of the second element, an arm (16) pivotally mounted on the base (16b) to pivot between a raised position and a lowered position, a handle (16a) fastened on the movable arm (16), and locking and unlocking means for locking and unlocking the arm in the raised or the lowered position.

10. A transformable tricycle according to any one of claims 1 to 9, wherein the tube (7) of the second element is made up of a removable half-tube (7b) engaging in a tube (7a) provided with a housing (45) in its bottom portion, of a clasp (46), and of a receptacle (46a) for attaching the clasp, for use in releasably fastening the half-tube (7b) on the tube (7a) in order to be able to separate the second element of the frame (1) from the spacer (20).

11. A transformable tricycle according to any one of claims 1 to 10, wherein the frame (1) is secured to a baggage-carrier (50) that, in the folded shape of the tricycle, is to be located in the proximity of the ground, and that serves, in combination with the wheels (3, 3a) of the first element, to guarantee that the transformable tricycle is stable on the ground.

12. A transformable tricycle according to any one of claims 1 to 11, wherein the rotary drive means of the drive wheel (9) comprise a set of pedals (10), a drive chain (11) engaging firstly with a chain wheel (12) of said set of pedals (10) and secondly with a sprocket (12a) secured to said drive wheel (9).

13. A transformable tricycle according to any one of claims 1 to 12, wherein the rotary drive means of the drive wheel (9) include an electric motor.
